# EUROPEAN PATENT APPLICATION

(11) **EP 4 759 112 A1**
(43) Date of publication of application: **17.06.2026**
(21) Application number: 25213566.0
(22) Date of filing: 05.11.2025
(51) Int. Cl.: A01C 7/20, A01B 63/22

(54) **AGRICULTURAL IMPLEMENT INCLUDING WHEEL UNITS FIXEDLY COUPLED TO A ROCKSHAFT, AND RELATED METHOD**

(30) Priority: 10.12.2024 US 202463730055 P
(71) Applicant: Agco Corporation, Duluth, Georgia 30096 (US)
(72) Inventor: FIGGER, Robert, Hesston (US); FANSHIER, Benjamin Anson, Hesston, 67062-0969 (US); BRINKER, Jarrett Lee, Hesston, 67062-0969 (US)
(74) Representative: AGCO Intellectual Property Department

(57) **Abstract**

An agricultural implement (104) includes a frame (106), a toolbar (124) coupled to the frame and carrying a plurality of row units (200), the toolbar comprising a center toolbar (126) and wing toolbars (128), a rockshaft assembly (145) coupled to at least one of the center toolbar and the frame, the rockshaft assembly comprising a rockshaft (144), and wheel units (142) between neighboring row units, each wheel unit comprising a wheel (108), the wheel units fixedly coupled to the rockshaft such that rotation of the rockshaft causes uniform rotation of the wheel units. The agricultural implement further includes at least one actuator (146) in operable communication with the rockshaft assembly and configured to cause rotation of the rockshaft assembly. A related method of operating the agricultural implement is also disclosed.

## Description

### FIELD

Embodiments of the present disclosure relate generally to an agricultural implement including a frame, a toolbar coupled to the frame, a plurality of row units coupled to the toolbar, and wheels coupled to the toolbar laterally between neighboring row units. More particularly, embodiments relate to a rockshaft coupled to wheels of a center toolbar and configured to lift and lower each of the wheels uniformly, and to related methods and systems.

### BACKGROUND

Planting an agricultural field may be performed with a planter including an agricultural implement having planter row units configured to deposit seeds in trenches formed by discs or other mechanisms. The agricultural implement may be towed behind a primary vehicle, such as a tractor. The agricultural implement may include a frame section operably coupled to the tractor with a tow hitch.

Row units are typically spaced along a toolbar of a planter, which may include multiple sections. For example, a 3-section planter has a center section, a left wing section, and a right wing section, each having several ground-engaging row units. A 3-section planter may have a nominal working width from about 30 feet (9.1 m) to about 40 feet (12.2 m), but can be wider or narrower.

To transport such a planter along roads, it is helpful to fold the wing sections. For example, the left and right wing sections may each rotate upward from the center section, as depicted in U.S. Patent 11,229,152, "Ground-engaging Implement with Lateral Position Adjustment," granted January 25, 2022. As another example, the left and right wing sections may fold horizontally rearward of the center section, as depicted in U.S. Patent 4,646,851, "Bi-fold Toolbar," granted March 3, 1987. Furthermore, the left and right wing sections may fold to be above the center section, as shown in U.S. Patent 8,807,236, "Agricultural Implement Incorporating Stack-fold Planter," granted August 19, 2014. Similarly, when the planter enters a field after transport, the wing sections are extended prior to starting planting operations.

Various factors, such as the amount of product (e.g., seeds, fertilizer) carried by the row units, the number of row units, and the length of the frame carrying the row units, may affect the weight of the agricultural implement. Some agricultural implements include wheels coupled to the chassis, frame, and/or toolbar to support the agricultural implement on the ground. Other agricultural implements are supported over the ground directly by the row units themselves rather than with wheels.

### BRIEF SUMMARY

According to an aspect of the disclosure, an agricultural implement comprises a frame, a toolbar coupled to the frame and carrying a plurality of row units, the toolbar comprising a center toolbar and wing toolbars, a rockshaft assembly coupled to the center toolbar, the rockshaft assembly comprising a rockshaft, wheel units laterally between neighboring row units, each wheel unit comprising a wheel, the wheel units fixedly coupled to the rockshaft such that rotation of the rockshaft causes uniform rotation of the wheel units, and at least one actuator in operable communication with the rockshaft assembly and configured to cause rotation of the rockshaft assembly to cause the wheel units coupled to the center toolbar to raise or lower uniformly.

In some aspects, the rockshaft assembly further comprises at least one bearing disposed around the rockshaft, the rockshaft assembly coupled to the center toolbar at a bearing housing of the at least one bearing.

In some embodiments, a first end of the at least one actuator is attached to a wheel unit of the wheel units and a second end of the at least one actuator is coupled to a mounting plate that is fixedly attached to the center toolbar.

The rockshaft assembly may further comprise a bearing comprising a bearing housing disposed around the rockshaft, and a connection member coupled to the bearing housing and the center toolbar.

Each wheel unit may further comprise a pair of wheel plates coupled to an axle of the respective wheel of the wheel unit, and a base plate between the pair of wheel plates and fixedly coupled to the pair of wheel plates, the base plate configured to couple to the at least one actuator. An end of an end of each wheel plate of the pair of wheel plates may be welded to the rockshaft.

In some embodiments, a first end of the at least one actuator is coupled to mounting plates fixedly coupled to the center toolbar, and a second end of the at least one actuator is coupled to the base plate of the respective wheel unit.

In some aspects, the at least one actuator is fixedly coupled to the at least one of the center toolbar and the frame. The at least one actuator may comprise one actuator for every wheel unit. In some embodiments, the at least one actuator comprises one actuator for every two wheel units.

An end of each actuator may be coupled to one of the wheel units.

In some embodiments, the agricultural implement further comprises mounting plates fixedly attached to the center toolbar, the at least one actuator coupled to the mounting plates, and connection members fixedly attached to the center toolbar, the connection members coupled to the rockshaft.

The at least one actuator may be laterally aligned with the wheel of at least one wheel unit of the plurality of wheel units.

The row units may comprise a trench opening assembly and a trench closing assembly. In some aspects, the row units each comprise a body, a seed meter, a trench opening assembly rotationally coupled to the body, a trench closing assembly rotationally coupled to the body, and gauge wheels rotationally coupled to the body.

The at least one actuator maybe a hydraulic cylinder.

The agricultural implement may further comprise wing toolbar wheel units coupled to the wing toolbars.

In some embodiments, the agricultural implement further comprises a control system configured to cause the wing toolbar wheel units to lift and lower responsive to rotation of the rockshaft.

In some aspects, a method of operating an agricultural implement comprises traversing an agricultural field with an agricultural implement comprising a frame, a toolbar coupled to the frame and carrying a plurality of row units, the toolbar comprising a center toolbar and wing toolbars, and a plurality of wheel units laterally between neighboring row units, each wheel unit comprising a wheel. The method further comprises causing a rockshaft operably coupled to the plurality of wheel units to rotate to lift or lower the wheels of the plurality of wheel units in unison.

Causing the rockshaft coupled to the plurality of wheel units to rotate to lift or lower the wheels of the plurality of wheel units in unison may further comprise rotating the rockshaft in a first direction to lift the wheels of the plurality of wheel units in unison.

In some embodiments, causing a rockshaft operably coupled to the plurality of wheel units to rotate to lift or lower the wheels of the plurality of wheel units in unison comprises rotating the rockshaft in a second direction to lower the wheels of the plurality of wheel units in unison.

In some aspects, causing a rockshaft operably coupled to the plurality of wheel units to rotate to lift or lower the wheels of the plurality of wheel units in unison comprises rotating the rockshaft with at least one actuator operably coupled to at least one wheel unit of the plurality of wheel units.

The method may further include causing wing toolbar wheel units coupled to the wing toolbars to lift or lower responsive to causing the rockshaft to lift or lower the wheels of the plurality of wheel units in unison.

In some embodiments, a control system for an agricultural machine comprises at least one processor, and at least one non-transitory computer-readable storage medium storing instructions thereon that, when executed by the at least one processor, cause the control system to cause a rockshaft operably coupled to a plurality of wheel units coupled to a center toolbar to rotate in a first direction to lift wheels of the plurality of wheel units in unison and lower row units coupled to the center toolbar relative to the center toolbar, at least one of the wheel units laterally between neighboring row units. The method further includes causing the rockshaft to rotate in a second direction to lower the wheels of the plurality of wheel units in unison and lift the row units coupled to the center toolbar relative to the center toolbar.

The control system may further comprise instructions that, when executed by the at least one processor, cause the control system to lift wing toolbar row units responsive to causing the rockshaft to rotate in the first direction.

**In** some embodiments, an agricultural implement comprises a frame, a toolbar coupled to the frame and carrying a plurality of row units, the toolbar comprising a center toolbar and wing toolbars, connection members connected to the center toolbar, each connection member connecting the center toolbar to a bearing disposed around a rockshaft, a plurality of pairs of wheel plates coupled to the rockshaft, each pair of wheel plates coupling the rockshaft to an axle of a wheel associated with the pair of wheel plates, a plurality of base plates, each base plate connecting the wheel plates of a pair of wheel plates to one another, and at least one actuator coupled to one of the base plates and a pair of mounting plates coupled to the center toolbar, the at least one actuator configured to rotate the rockshaft and cause the plurality of pairs of wheel plates and associated wheels to rotate about the rockshaft.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 illustrates a system that including a tractor towing an agricultural implement including row units 200 in a field along a forward direction F;
FIG. 2 is a simplified perspective view of the agricultural implement in an extended configuration;
FIG. 3 is a simplified perspective view of the agricultural implement in a folded configuration;
FIG. 4 is a simplified side view illustrating a single row unit in the form of a planter row unit;
FIG. 5 is a simplified side view of another row unit that may be carried by the agricultural implement of FIG. 1;
FIG. 6A is a simplified perspective view illustrating components of the agricultural implement from a front of the agricultural implement;
FIG. 6B is a simplified perspective view illustrating components of the agricultural implement from a rear of the agricultural implement;
FIG. 7 is a simplified perspective view of a wheel assembly of the agricultural implement;
FIG. 8 is a simplified perspective view illustrating a portion of the wheel assembly of FIG. 7;
FIG. 9 is a simplified perspective view illustrating a connection between a rockshaft assembly and a center toolbar of the agricultural implement;
FIG. 10 is a simplified schematic illustrating a hydraulic system of the agricultural implement;
FIG. 11 is a simplified flow chart illustrating a method of operating the agricultural implement of FIG. 1; and
FIG. 12 is a schematic of a computer-readable storage medium including processor-executable instructions configured to embody one or more of the methods of controlling a position of a toolbar of the agricultural implement of FIG. 1.

### DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

From reading the following description it should be understood that the terms "longitudinal" and "transverse" are made in relation to a machine's (e.g., agricultural implement's, agricultural application machine) normal direction of travel. In other words, the term "longitudinal" equates to the fore-and-aft direction, whereas the term "transverse" equates to the crosswise direction, or left and right. As used herein, the terms "lateral" and "transverse" are used interchangeably.

As used throughout, ranges are used as shorthand for describing each and every value that is within the range. Any value within the range can be selected as the terminus of the range.

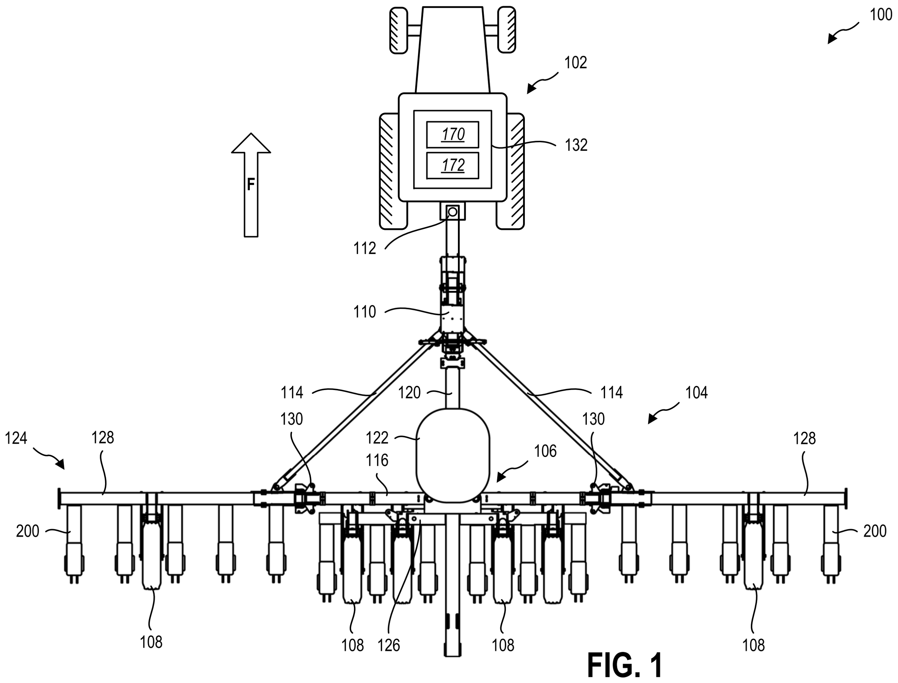

FIG. 1 illustrates a system 100 (e.g., an agricultural machine) that includes a tractor 102 drawing an agricultural implement 104 with row units 200 in a field along a forward direction F. The agricultural implement 104 may have a frame 106 supported by one or more wheels 108, and a tongue 110 connected at the forward end to a tow hitch 112 of the tractor 102. The agricultural implement 104 may include a planter, an air seeder, or another implement configured to deliver seeds to soil in the field. In some embodiments, the agricultural implement 104 is configured to deliver fertilizer to the field.

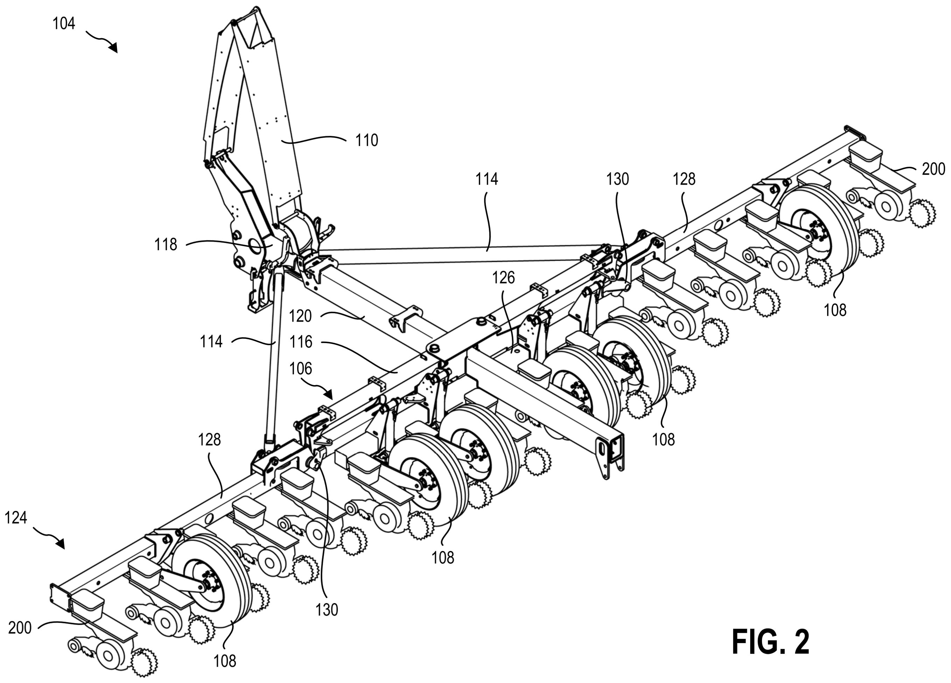

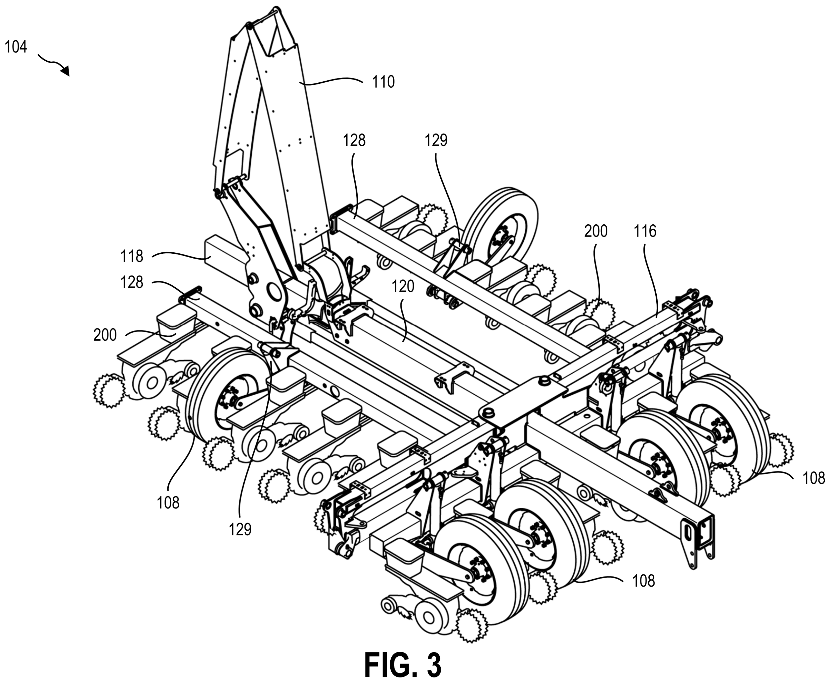

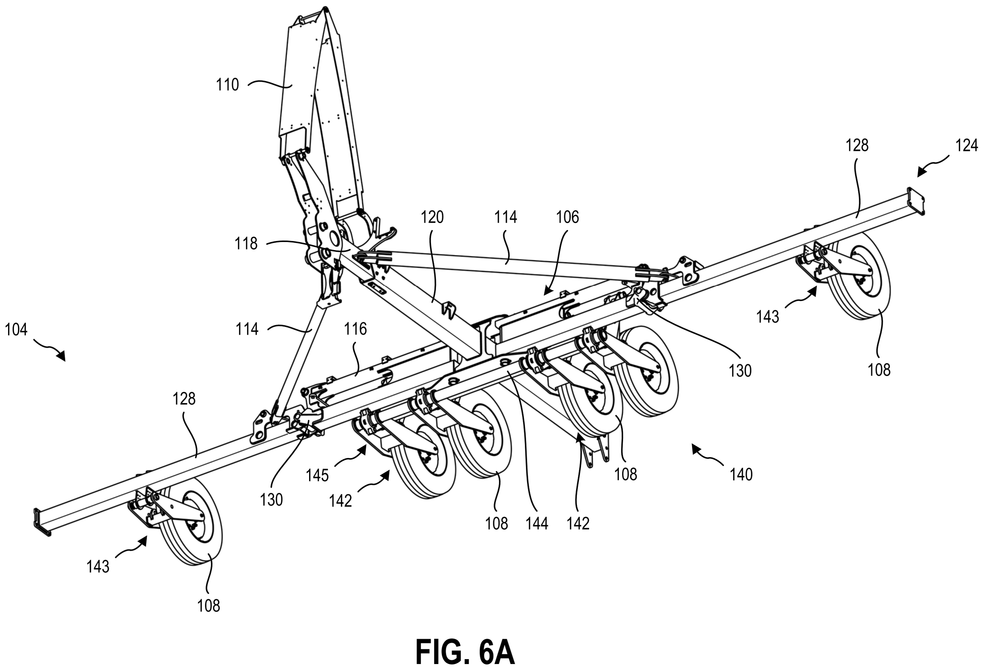

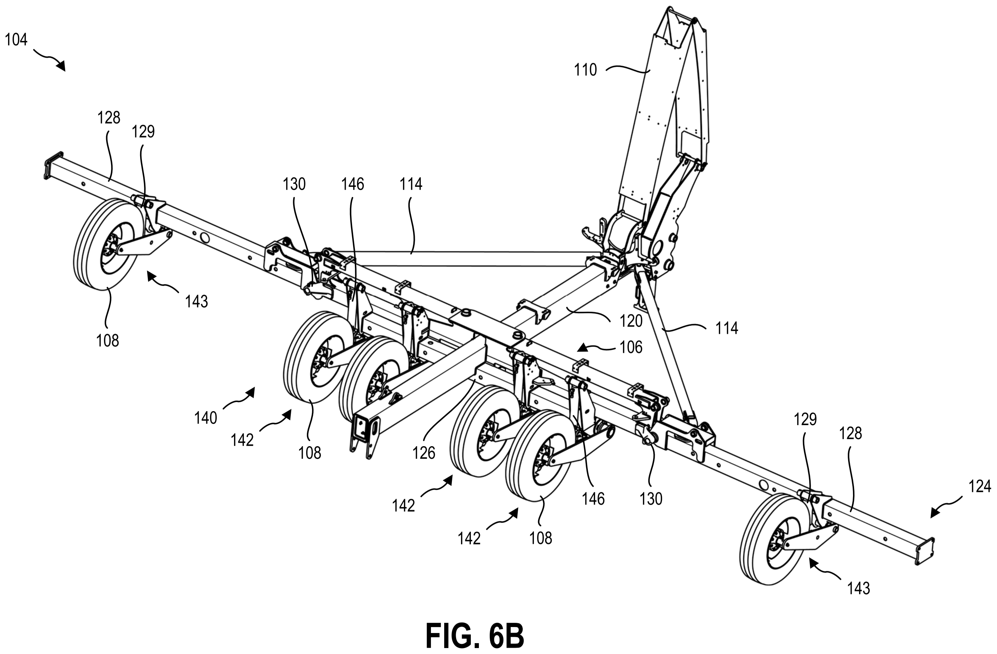

FIG. 2 is a simplified perspective view of the agricultural implement 104 in an extended configuration. With reference to FIG. 1 and FIG. 2, the frame 106 may include a central member 116 extending in the lateral direction, angled portions 114 extending from the central member 116, and a drawbar 120 extending in the fore and aft direction from the tongue 110. The frame 106 may further include a retracting member 118 configured to retract into the drawbar 120 when the agricultural implement 104 is in the extended configuration shown in FIG. 1. The tongue 110 may be connected to the retracting member 118. When the agricultural implement 104 is moved to a folded position for transport, the tongue 110 may extend in the fore and aft direction to cause the agricultural implement 104 to fold. For example, when the tongue 110 is moved to an extended position, the tongue 110 pulls the retracting member 118 in the fore direction and out of the drawbar 120 to fold the agricultural implement 104 as illustrated in FIG. 3; and when the tongue 110 is moved to the position illustrated in FIG. 2, FIG. 6A and FIG. 6B, the retracting member 118 is retracted into the drawbar 120 to extend the agricultural implement 104 in the position illustrated in FIG. 2, FIG. 6A, and FIG. 6B.

The frame 106 may carry a material hopper 122 (FIG. 1) configured to provide material (e.g., product, such as seeds, fertilizer, etc.) to the row units 200. The material hopper 122 is only illustrated in FIG. 1 and is not illustrated in FIG. 2 through FIG. 9 for clarity and ease of understanding the description and drawings. In some embodiments, the material hopper 122 carries seeds. The wheels 108 may support substantially all of the weight of the agricultural implement 104, including material in the material hopper 122. Typically, the row units 200 do not support significant weight of the agricultural implement 104, though the row units 200 may exert a force on the ground during operation. In certain embodiments, the weight of the agricultural implement 104 may be borne by the tow hitch 112.

The agricultural implement 104 has a toolbar 124 carrying the row units 200. The toolbar 124 may be connected to the frame 106 or may include a portion of the frame 106. In the embodiment shown in FIG. 1 and FIG. 2, the toolbar 124 is divided into three sections: a center toolbar 126 connected to the frame 106, and two wing toolbars 128 connected to opposite lateral ends of the center toolbar 126 or the central member 116 of the frame 106. In other embodiments, there may be two wing toolbars on the left of the center toolbar 126 and/or central member 116 and two wing toolbars on the right (i.e., one toolbar connected to the end of another on each side). In FIG. 1 and FIG. 2, the center toolbar 126 is illustrated as being located behind the wing toolbars 128 and the wing toolbars 128 are illustrated as connected to the central member 116 by hinged connections 130. In other embodiments, the wing toolbars 128 are directly coupled to the center toolbar 126 at hinged connections 130. As shown in FIG. 1 and FIG. 2, the wheels 108 may be located laterally between two neighboring row units 200. For example, the wheels 108 coupled to the center toolbar 126 may be located directly laterally between two neighboring row units 200.

During planting or fertilization operations, the agricultural implement 104 may be in an extended position wherein the wing toolbars 128 laterally extend from the central member 116 and/or the center toolbar 126 in a transverse direction, as shown in FIG. 1 and FIG. 2. During road transport and when the agricultural implement 104 is towed through, from example, a headland, the agricultural implement 104 may be moved to a folded configuration by folding the wing toolbars 128, as shown in FIG. 3, which is a simplified perspective view of the agricultural implement 104 in a folded configuration. The wing toolbars 128 may be folded by extending the retracting member 118 out from the drawbar 120 by extension of the tongue 110.

During road transport, the wheels 108 may be in a lowered position to cause the row units 200 to be lifted (e.g., raised) from a surface of the ground and to lift (e.g., raise) the row units 200 relative to the center toolbar 126. Prior to beginning a planting or fertilization operation, an operator of the system 100 may rotate the wheels 108 to a lifted position to lift the wheels 108 relative to the toolbar 124 and lower the row units 200 relative to the toolbar 124. It is desired to raise and lower the row units 200 uniformly such that the row units 200 contact the ground surface at a similar time, depth, and with a similar downforce. As described in detail herein, the wheels 108 may be configured to rotate uniformly by means of a connecting rockshaft 144. In addition, the wheels 108 and the rockshaft 144 may be located proximate the row units 200 such that rotation of the rockshaft 144 causes the row units 200 coupled to the rockshaft 144 to raise or lower depending on the rotation of the rockshaft 144.

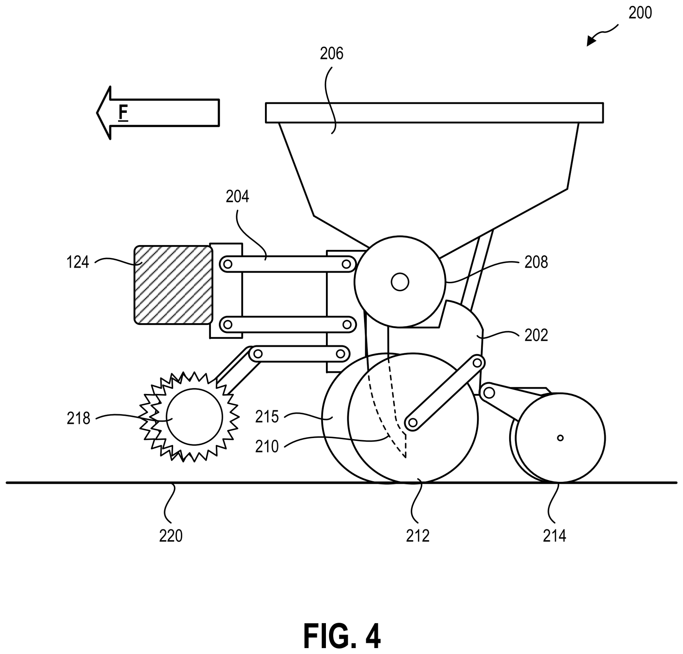

The row units 200 may be any type of ground-engaging device for planting, seeding, fertilizing, tilling, or otherwise working crops or soil, typically in rows. For example, the row units may be similar to the row units described in U.S. Patent Application 2024/0188472 A1, "Agricultural Implements Having Row Unit Position Sensors and at Least One Adjustable Wheel, and Related Control Systems and Methods," published June 13, 2024. As an example, FIG. 4 is a simplified side view illustrating a single row unit 200 in the form of a planter row unit. Each row unit 200 has a body 202 connected to the toolbar 124 (e.g., the center toolbar 126 or one of the wing toolbars 128) by a parallel linkage 204, enabling the row unit 200 to move vertically independent of the toolbar 124. In some embodiments, the body 202 of the row unit 200 may be connected to the toolbar 124 by another structure, such as a rotating arm. The body 202 may be a unitary member, or may include one or more members coupled together (e.g., by bolts, welds, etc.). The body 202 operably supports one or more of a hopper 206, a seed meter 208, a product delivery mechanism 210 (e.g., a seed delivery mechanism), a trench opening assembly 212, a trench closing assembly 214, and/or any other components as known in the art. Each of the trench opening assembly 212 and the trench closing assembly 214 are rotationally coupled to the row unit 200, such as to the body 202. The row unit 200 shown in FIG. 4 may optionally be a part of a central fill planter, in which case the hopper 206 may be one or more mini-hoppers fed by the material hopper 122 (FIG. 1) carried by the agricultural implement 104. In other embodiments, the material hopper 122 may be omitted, and each row unit 200 may simply use its own hopper 206 alone.

In some embodiments, the row unit 200 further includes gauge wheels 215 are disposed on opposite sides of the row unit 200 and rotatably mounted on the body 202 of the row unit 200 to support the body 202 and limit the depth of penetration of the trench opening assembly 212 into the ground. To illustrate the trench opening assembly 212, one of the gauge wheels 215 are not illustrated in FIG. 4 since the gauge wheel 215 would obstruct the view of the trench opening assembly 212. In some embodiments, the row unit 200 further includes row cleaners 218 at a forward end configured to move stalks, leaves, dirt, or other materials away from where the trenches will be formed by the trench opening assembly 212. During operation, wheels of the trench opening assembly 212, the trench closing assembly 214, and the gauge wheels 215 may be configured to contact a ground surface 220 to work the soil.

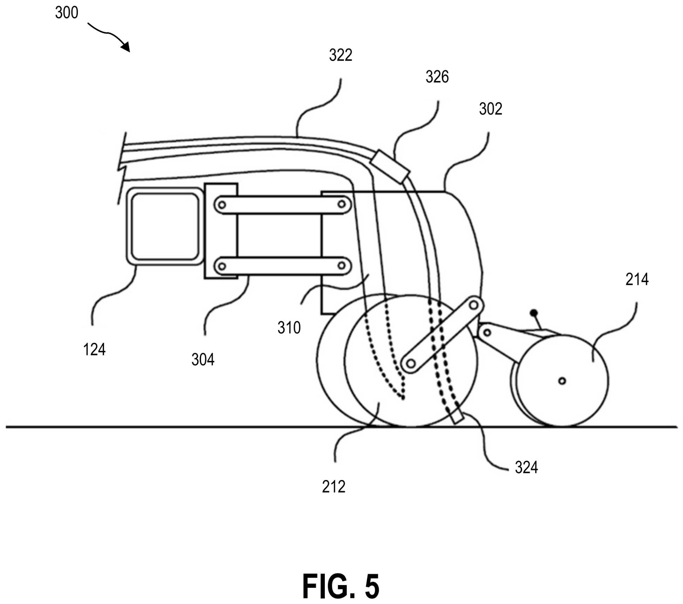

While the row units 200 have been described as being configured to provide seeds to the field, the disclosure is not so limited. In some embodiments, the row units 200 are configured to provide solid fertilizer to the field. In addition, while the row units 200 have been described and illustrated as including a particular type of row unit, the disclosure is not so limited. FIG. 5 is an example of another row unit 300 configured to provide product (e.g., seed, fertilizer) to the field. The row unit 300 may be substantially similar to the row unit 200, but may include a first conduit 310 and a second conduit 322 extending through a body 302 of the row unit 300. The first conduit 310 may be configured to carry a solid product (e.g., seeds, solid fertilizer) and provide the solid product to the field. The second conduit 322 may be configured to carry a liquid, such as liquid fertilizer, and provide the liquid to the field through a fluid outlet line 324. A flow sensor 326 may be coupled to the second conduit 322 and configured to measure a flow rate of product flowing through the second conduit 322. The row unit 300 may be coupled to the toolbar 124 by a parallel linkage 304, as described above with reference to the row unit 200.

FIG. 6A is a simplified, perspective view of the agricultural implement 104 from a front of the agricultural implement 104; and FIG. 6B is a simplified, perspective view of the agricultural implement 104 from a rear of the agricultural implement 104. For clarity and ease of understanding the description, FIG. 6A and FIG. 6B do not illustrate certain components of the agricultural implement 104, such as the row units 200, portions of the row units 200, or the material hoppers 122. With reference to FIG. 6A and FIG. 6B, the center toolbar 126 may be coupled to the frame 106, such as to the central member 116 of the frame 106. As described above, in some embodiments, the wing toolbars 128 are connected to the frame 106 at the central member 116 at hinged connections 130. In other embodiments, the wing toolbars 128 are connected to the center toolbar 126 at hinged connections between the center toolbar 126 and the wing toolbars 128.

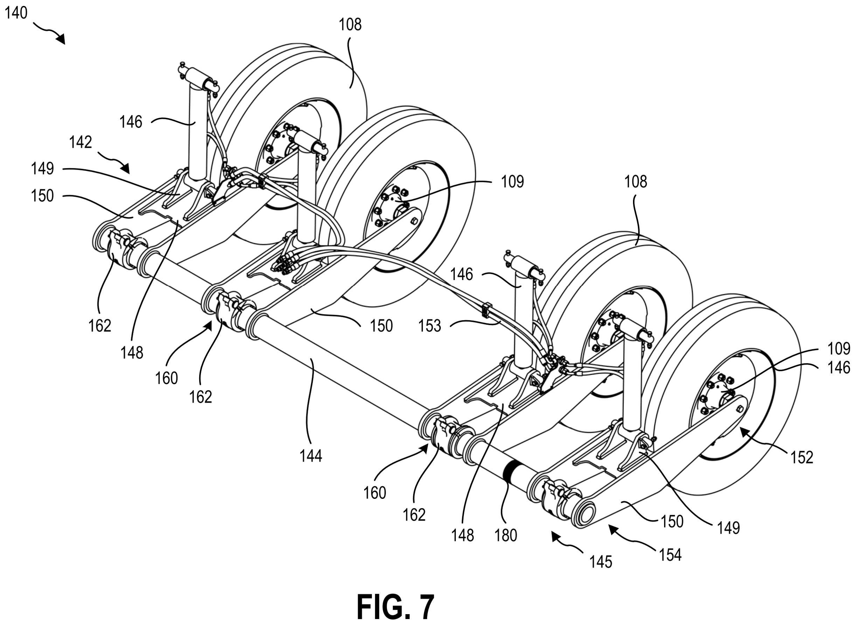

Each wing toolbar 128 may include at least one wheel 108 couped thereto for supporting the wing toolbar 128; and the center toolbar 126 may include wheels 108 coupled thereto for supporting the toolbar 124 over the ground. The wheels 108 of the center toolbar 126 may be mechanically connected to one another by means of a rockshaft assembly 145 (best seen in FIG. 6A) including a rockshaft 144 (best seen in FIG. 7) such that the wheels 108 of the center toolbar 126 move up and down in unison by rotation of the rockshaft 144. The rockshaft 144 may be located below the center toolbar 126. In some embodiments, a length of the rockshaft 144 is greater than a length of the center toolbar 126. In other embodiments, the length of the rockshaft 144 is less than the length of the center toolbar 126. In some embodiments, the length of the rockshaft 144 is about the same as the length of the center toolbar 126.

In some embodiments, the center toolbar 126 is coupled to a wheel assembly 140 including a plurality of wheel units 142 (which may also be referred to as "center toolbar wheel units 142") and the rockshaft assembly 145 to which the wheel units 142 are coupled. The wheels 108 connected to the wing toolbar 128 may not be connected to the rockshaft 144 and may be configured to move independently of the wheels 108 connected to the center toolbar 126 or the other wing toolbar(s) 128. In some embodiments, wing toolbar wheel units 143 are coupled to the wing toolbars 128 and are not operably coupled to the rockshaft 144. Accordingly, the wing toolbar wheel units 143 may be independent of the center toolbar wheel units 142. In some embodiments, the wheels 108 attached to the wing toolbar(s) 128 are in operable communication with actuators 129 configured to cause the wheels 108 to rotate about the wing toolbar(s) 128 to lift and/or lower the row units 200. Accordingly, movement of the wheels 108 attached to the wing toolbar(s) 128 may be independent of the movement of the wheels 108 attached to the center toolbar 126.

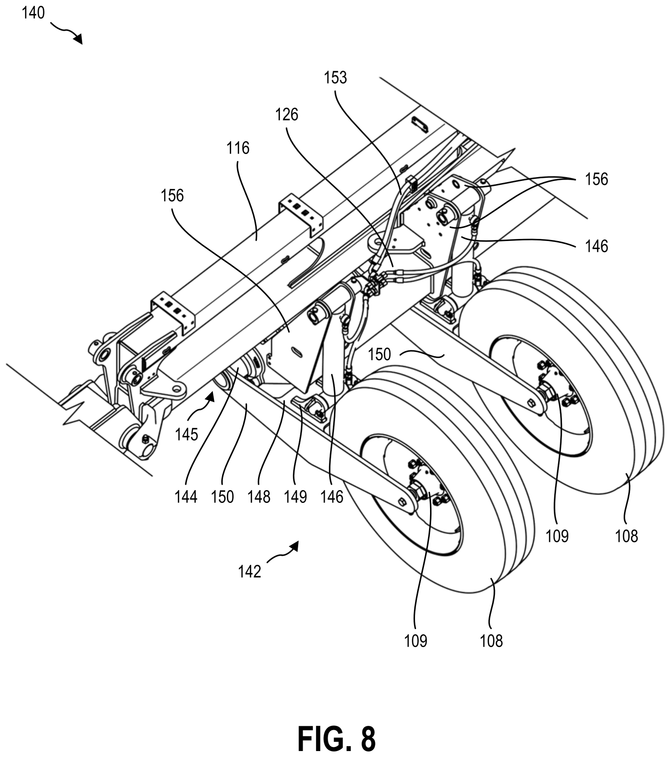

FIG. 7 is a simplified perspective view of the wheel assembly 140 configured to couple to the center toolbar 126. For clarity and ease of understanding the description, FIG. 7 does not illustrate the other components of the agricultural implement 104 and only illustrates the wheel assembly 140. FIG. 8 is a simplified perspective view illustrating a portion of the wheel assembly 140 coupled to the center toolbar 126. With reference to FIG. 7 and FIG. 8, the wheel units 142 and the wheel assembly 140 are coupled (attached) to the center toolbar 126 by actuators 146 that are coupled (attached) at a first end to the wheel units 142 and coupled at a second end to mounting plates 156 (best seen in FIG. 8 and not shown in FIG. 7 to more clearly illustrate other components of the wheel assembly 140) that are fixedly attached to the center toolbar 126. Thus, the actuators 146 are coupled to the center toolbar 126 by means of the mounting plates 156. The mounting plates 156 may also be referred to as "brackets" or "mounting brackets."

The wheel assembly 140 may include a plurality of wheel units 142, each wheel unit 142 including a wheel 108. The wheel units 142 may be configured to rotate uniformly with one another about the rockshaft 144. The wheel units 142 may be configured to move up and down (e.g., lift and lower) in unison. Each of the wheel units 142 may be rotatably coupled to the rockshaft 144 which mechanically connects each of the wheel units 142 to one another. In some embodiments, each of the wheel units 142 are welded or otherwise fixedly attached to the rockshaft 144. For example, rotation of the rockshaft 144 causes uniform rotation of each of the wheel units 142 about the rockshaft 144. Uniform rotation of the wheel units 142 about the rockshaft 144 facilitates movement of each of the wheels 108 the same distance up and down relative to the ground and the center toolbar 126 and/or the frame 106. With reference to FIG. 2 and FIG. 3, the wheels 108 and the wheel units 142 may be laterally between neighboring row units 200. As used herein, wheels 108 that are laterally between neighboring row units 200 means and includes the wheels 108 are positioned such that the wheels 108 and the row units 200 contact the ground surface 220 (FIG. 4) at a location that is less than a predetermined threshold distance from where the row units 200 contact the ground surface 220 and at least a portion of the row units 200 are located the same distance in the longitudinal direction (in the fore and aft direction) from the center toolbar 126 as the wheels 108. The threshold distance may be less than about 50 cm, less than about 40 cm, or less than about 30 cm. In some embodiments, each row unit 200 and/or at least a portion of the row unit 200 overlaps (is longitudinally aligned with the laterally neighboring wheels 108) such that each row unit 200 and/or a portion of the row unit 200 overlaps the wheel 108 in the longitudinal direction and at least a portion of the row unit 200 is located within longitudinal boundaries of the wheel 108.

The wheel units 142 may each include a pair of wheel plates 150 configured to couple to an axle 109 of the wheels 108. In addition, each wheel unit 142 may include a base plate 148 between the wheel plates 150. Accordingly, the wheel units 142 may each include a pair of wheel plates 150 coupled to and extending between the axle 109 of the wheel 108 of the wheel unit 142 and the rockshaft 144; and a base plate 148 coupled to and extending between the wheel plates 150. At least one of the wheel units 142 may be coupled to an actuator 146. The actuator 146 may be configured to cause the rockshaft 144 to rotate (e.g., oscillate) in a first direction and a second direction, depending on movement of the actuator 146. A first end of the actuator 146 (one of the piston end or the cylinder end) may be coupled to a respective wheel unit 142 at the base plate 148 of the wheel unit 142. For example, the first end of the actuator 146 may be coupled to brackets 149 that are fixedly coupled (e.g., welded) to the base plate 148. The base plate 148 may be welded or otherwise fixedly attached to wheel plates 150 of the wheel unit 142. A first end 152 (FIG. 7) of the wheel plates 150 may include an opening configured to receive an end of an axle 109 of the respective wheel 108 of the wheel unit 142. A second end 154 (FIG. 7) of the wheel plates 150 may be welded or otherwise fixedly attached to the rockshaft 144 of the rockshaft assembly 145. As best seen in FIG. 8, a second end of the actuator 146 may be coupled to mounting plates 156 of the wheel assembly 140 (not illustrated in FIG. 7 for clarity) that are, in turn, fixedly coupled to the center toolbar 126. In some embodiments, the mounting plates 156 are welded to the center toolbar 126. The actuators 146 may be fixedly coupled to at least one of the center toolbar 126 and the frame 106, such as by means of the mounting plates 156 that are fixedly coupled to the center toolbar 126. Each of the actuators 146 may be in fluid communication with a hydraulic system, such as a hydraulic fluid supply and a hydraulic fluid return, via hydraulic lines 153. For clarity and ease of understanding the description, the hydraulic lines 153 are shown in FIG. 7 and FIG. 8, but are not illustrated in the other figures.

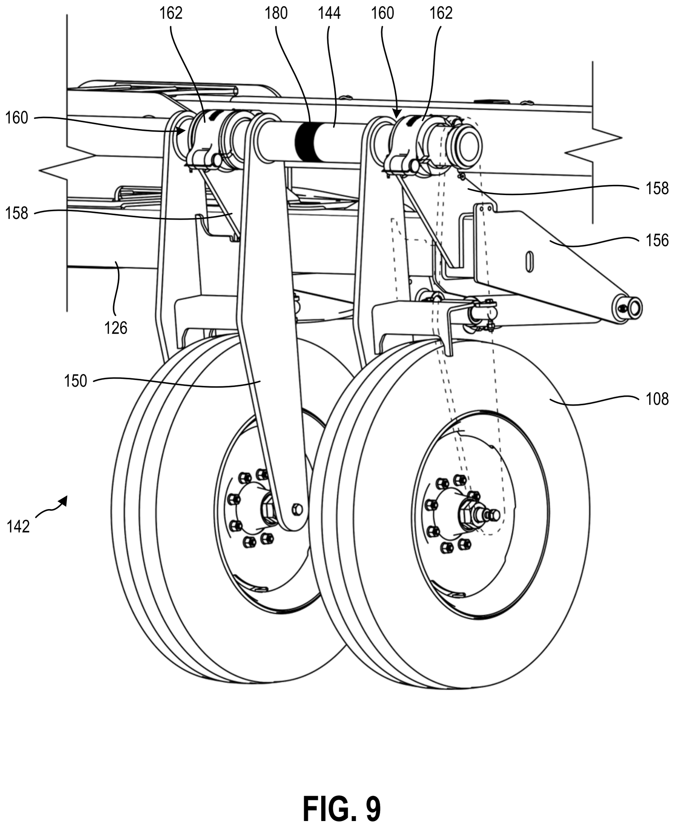

FIG. 9 is a simplified perspective view illustrating how the rockshaft assembly 145 is connected to the center toolbar 126. The rockshaft assembly 145 may include the rockshaft 144, at least one bearing 160 disposed around a circumference of the rockshaft 144, and a connection member 158 coupling the rockshaft assembly 145 to the center toolbar 128. Each bearing 160 may include a bearing housing 162 containing a bearing, such as a ball bearing. The ball bearing may include, for example, the bearing housing 162 including an inner race and an outer race and roller balls between the inner race and the outer race. The rockshaft 144 may be configured to rotate with the bearing housing 162. In some embodiments, the rockshaft 144 is configured to oscillate on the bearings rather than revolving completely around. For example, the rockshaft 144 may be configured to rotate between a first rotational position and a second rotational position corresponding to a raised position and a lowered position of the wheels 108.

With reference to FIG. 8 and FIG. 9, the rockshaft assembly 145 may be coupled to the center toolbar 126 at the connection member 158. The connection member 158 may be connected to the center toolbar 126 and to the bearing housing 162 disposed around a circumference of the rockshaft 144. In some embodiments, the connection member 158 is fixedly coupled to the bearing housing 162 and to the center toolbar 126. In some such embodiments, the bearing housing 162 may be fixed with respect to the center toolbar 126. Since the connection member 158 is coupled to the center toolbar 126 and to the bearing housing 162, the rockshaft 144 may be coupled to the center toolbar 126 by means of the connection between the connection member 158 and the bearing housing 162. In FIG. 9, one of the wheel plates 150 is shown in phantom to more clearly illustrate the connection between the connection member 158 and each of the bearing housing 162 and the center toolbar 126.

With reference to FIG. 7 and FIG. 9, the actuators 146 may be located within lateral boundaries of the wheel units 142. For example, the actuators 146 may be laterally between the wheel plates 150 of the wheel units 142. In some embodiments, the actuators 146 are laterally aligned with the bearing 160 and the connection member 158. The actuators 146 may be laterally aligned with the wheels 108 of the respective wheel units 142. Although FIG. 7 has been described and illustrated as having a particular configuration of actuators 146 coupled to the wheel units 142, the disclosure is not so limited. In some embodiments, the actuators 146 are located between the mounting plates 156 of the wheel units 142. The actuators 146 may be coupled to the wheel units 142 at locations other than the base plate 148.

Accordingly, the wheel assembly 140 may be coupled to the center toolbar 126 by means of the connection member 158 and the mounting plates 156. The mounting plates 156 are directly coupled to the center toolbar 126 and to one end of the actuators 146. The second end of the actuators 146 are coupled to the wheel unit 142, which are, in turn, coupled to the rockshaft 144. The center toolbar 126 may be attached to the actuators 146 (by means of the mounting plates 156), which are coupled to the wheel units 142; and to the rockshaft 144 by means of the connection members 158. The row units 200 may be coupled to the center toolbar 126, as illustrated in FIG. 1 through FIG. 5.

In operation, the actuators 146 may cause the rockshaft 144 to rotate within the bearing 160. Since the wheel units 142 are fixedly coupled to the rockshaft 144 by means of the wheel plates 150, rotation of the rockshaft 144 may also rotate the wheel units 142 about the rockshaft 144. In some embodiments, extension of the actuator 146 (e.g., extension of the piston from the cylinder of the actuator 146) may cause the wheel units 142 to extend to lift the row units 200 from the ground. Retraction of the actuators 146 (e.g., retraction of the piston back into the cylinder) may cause the wheel units 142 to rotate to the position illustrated in FIG. 2 to cause the row units to contact the ground, such as during planting or fertilization operations. Since the wheels 108 are located laterally between neighboring row units 200 (e.g., are located about the same distance from the center toolbar 126 in the forward direction F (longitudinal direction) as the row units 200), lifting or lowering the wheels 108 may cause the row units 200 to be lifted or lowered uniformly with rotation of the rockshaft 144.

The actuators 146 may include single rod hydraulic actuators (e.g., a linear-acting, piston and rod assembly), double rod hydraulic cylinders, rotary actuators, or other types of actuators. The actuators 146 may be pneumatic, electric, magnetic, or electromagnetic actuators.

In some embodiments, the wheel assembly 140 includes at least one sensor 180 configured to measure a position of the wheel assembly 140, such as the rotational position of the rockshaft 144 and/or at least one of the wheel units 142 coupled to the rockshaft 144. For example, the at least one sensor 180 may be configured to measure the rotational position of at least one of the rockshaft 144 and at least one wheel unit 142 with respect to the center toolbar 126 (e.g., a longitudinal axis of the center toolbar 126) and/or the frame 106. The sensor 180 may include, for example, a rotary encoder configured to provide an angle value for every programmed amount of sensed rotation. In some embodiments, the sensor 180 includes a displacement sensor configured to determine a displacement of at least one of the actuators 146 and/or a percentage of travel of the at least one of the actuators 146.

As illustrated in FIG. 7, in some embodiments, the center toolbar 126 is coupled to four wheel units 142 and four row units 200. In other embodiments, the center toolbar 126 may be coupled to any number of wheel units 142, such as two wheel units 142, six wheel units 142, or any other number of wheel units 142 depending on the configuration of the particular agricultural implement 104. In addition, the center toolbar 126 may be coupled to any number of row units 200, such as two row units 200, six row units 200, or any other number of row units 200 depending on the configuration of the particular agricultural implement 104.

In addition, while FIG. 7 illustrates that each of the wheel units 142 are coupled to a respective actuator 146 and that the wheel assembly 140 includes or is in operable communication with one actuator 146 for each wheel 108, the disclosure is not so limited. In some embodiments, the wheel assembly 140 includes or is in operable communication with fewer actuators 146 than the number of wheels 108. For example, the wheel assembly 140 may be coupled to a single actuator 146. In some such embodiments, the actuator 146 may not be associated with a particular one of the wheel units 142 and may be associated with, for example, each of the wheel units 142 coupled to the rockshaft 144. In some embodiments, the rockshaft 144 may include a protrusion coupled (e.g., welded) thereto and in operable communication with the actuator 146. Operation of the actuator 146 may cause the rockshaft 144 to rotate back and forth depending on the position of the actuator 146. It will be appreciated that coupling the rockshaft 144 to multiple actuators 146 at multiple locations along the length of the rockshaft 144 may decrease the torque on the rockshaft 144 during rotation thereof.

In other embodiments, the wheel assembly 140 includes one actuator 146 for every two wheels 108. In some such embodiments, every other one of the wheel units 142 coupled to the rockshaft 144 may include an actuator 146. As one example, every other one of the wheel units 142 may be coupled to an actuator 146.

Although the wheel units 142 are described and illustrated as being coupled to the actuators 146, the disclosure is not so limited. In some embodiments, the actuators 146 are coupled to the rockshaft 144 by means other than the wheel units 142. For example, the actuators 146 may be fixedly coupled to the center toolbar 126 and coupled to one or more other members that are fixedly coupled to the rockshaft 144 such that actuation of the actuator 146 causes the rockshaft 144 to rotate. The wheel units 142 may each be coupled to the rockshaft 144 by means of the wheel plates 150 are described above.

Accordingly, at least one actuator 146 may be coupled to the rockshaft 144 to cause the rockshaft 144 to rotate. The wheel units 142 may be coupled to the rockshaft 144 by the wheel plates 150 such that rotation of the rockshaft 144 causes the wheel units 142 to rotate about the rockshaft 144 (e.g., along a longitudinal axis of the rockshaft 144).

With reference back to FIG. 1, in some embodiments, the system 100 includes a control system 132 configured to control operation of the wheels 108. The control system 132 may be located within the tractor 102 and may comprise, for example, a task controller of the tractor 102. The control system 132 may include wheel assembly controller 170 in operable communication with the actuators 146 and a wing toolbar controller 172 in operable communication with the actuators 129 of the wing toolbar wheel units 143 coupled to the wing toolbars 128.

The wheel assembly controller 170 may be configured to cause the actuators 146 to rotate the rockshaft 144 to which the wheel units 142 are coupled. In some embodiments, responsive to receiving a lift command (such as from an operator of the tractor 102 and/or the agricultural implement 104), the wheel assembly controller 170 causes the actuators 146 to rotate the rockshaft 144 to cause the wheels 108 to be lowered to a position where the row units 200 are lifted relative to the ground. In addition, responsive to receiving a lower command, the wheel assembly controller 170 may cause the actuators 146 to rotate the rockshaft 144 to a position to cause the wheels 108 to be lifted to a position where the row units 200 engage the ground.

The wing toolbar controller 172 may be configured to cause the actuators 129 coupled to the wing toolbar wheel units 143 to rotate about the wing toolbars 128 to correspond to the rotation of the wheel units 142 of the wheel assembly 140 such that the wheels 108 and the row units 200 coupled to the wing toolbars 128 are at the same (e.g., substantially the same) elevation as the row units 200 and wheels 108 coupled to the center toolbar 126. In some embodiments, the wing toolbar controller 172 is configured to cause the actuators 129 of the wing toolbar wheel units 143 to follow the motion and actuation of the actuators 146 coupled to the wheel units 142 of the wheel assembly 140 such that the wing toolbars 128 lift and lower in unison with the movement of the center toolbar 126.

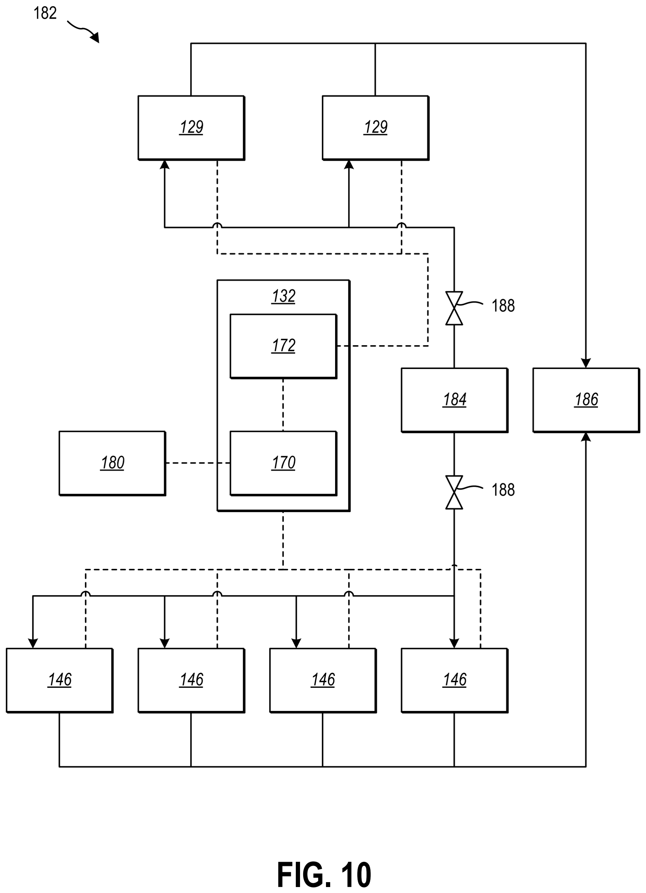

In some embodiments, the system 100 includes electronically controlled valves to cause the wing toolbars 128 follow the motion of the rockshaft 144 to lift and lower the entire agricultural implement 104 evenly. FIG. 10 is a simplified schematic illustrating a hydraulic system 182 of the agricultural implement 104. The hydraulic system 182 includes the control system 132 including the wheel assembly controller 170 and the wing toolbar controller 172. The hydraulic system 182 may include a hydraulic fluid supply 184 and a hydraulic fluid return 186, each of which is in fluid communication with the actuators 146 of the wheel units 142 and the actuators 129 of the wing toolbar wheel units 143.

In some embodiments, the wheel assembly controller 170 is in operable communication with the actuators 146 of the wheel units 142. The wing toolbar controller 172 may be in operable communication with the actuators 129 of the toolbar wheel units 143. In addition, the wing toolbar controller 172 may be in operable communication with the sensor 180 and the wheel assembly controller 170. In some embodiments, the wing toolbar controller 172 is configured to control a flow of hydraulic fluid to the actuators 129 based on the position of at least one of the rockshaft 144 and/or the actuators 146. The wing toolbar controller 172 may receive an indication of the position of at least one of the rockshaft 144 and/or the actuators 146 from at least one of the sensor 180 and the wheel assembly controller 170. In some embodiments, electronically controlled valves 178 are configured to control a flow of hydraulic fluid to each of the actuators 129, 146.

Connecting the wheel units 142 coupled to the center toolbar 126 to the rockshaft 144 facilitates uniform lifting and lowering of the wheels 108 of the center toolbar 126. By way of comparison, agricultural implements including wheel units that are lifted or lowered with primary-secondary hydraulics wherein a primary actuator receives hydraulic fluid before other actuators, and the remaining actuators are receive hydraulic fluid sequentially from the primary actuator or another secondary actuator. Such primary-secondary hydraulic systems require phasing and suffer from the actuators falling out of phase during operation and/or plugging of equipment configured to cause the actuators to remain in phase and/or rephase.

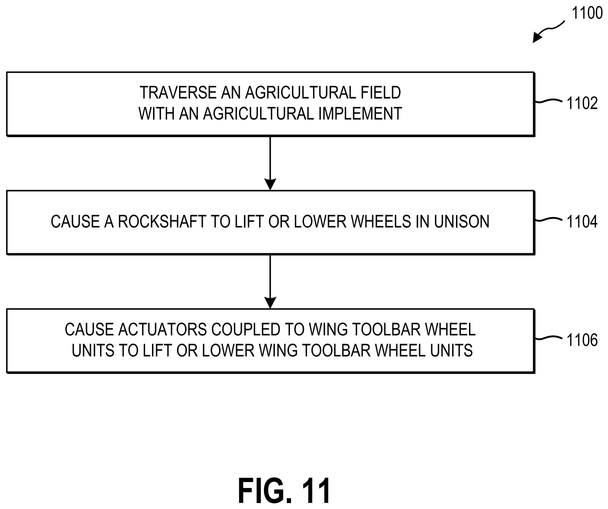

FIG. 11 is a simplified flow chart illustrating a method 1100 of operating the agricultural implement. The method 1100 includes traversing an agricultural field with an agricultural implement, as shown in act 1102. The agricultural implement may be the same as the agricultural implement 104 and may include the wheel assembly 140 including the rockshaft assembly 145. The method 1100 further includes causing a rockshaft to lift or lower wheels of a plurality of wheel units coupled to a center toolbar of the agricultural implement in unison, as shown in act 1104. In some embodiments, act 1104 includes rotating the rockshaft 144 with actuators 146 to lift and lower the wheel units 142 coupled to the rockshaft 144, as described above.

Responsive to lifting or lowering the wheels of the plurality of wheel units in unison with the rockshaft, method 1100 may further include causing actuators coupled to wing toolbar wheel units to lift and lower the wing toolbar wheel units, as shown in act 1106. In some embodiments, act 1106 comprises causing the wing toolbar wheel units 143 to follow the motion of the wheel units 142, as described above.

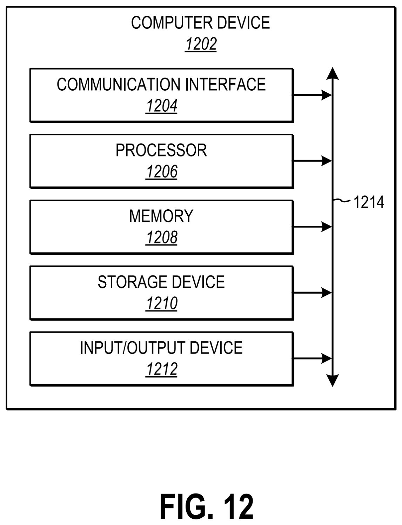

FIG. 12 is a schematic view of a computer device 1202. In some embodiments, control system 132 includes a computer device such as the computer device 1202 of FIG. 12. The computer device 1202 may include a communication interface 1204, at least one processor 1206, a memory 1208, a storage device 1210, an input/output device 1212, and a bus 1214. The computer device 1202 may be used to implement various functions, operations, acts, processes, and/or methods disclosed herein, such as the method 1100.

The communication interface 1204 may include hardware, software, or both. The communication interface 1204 may provide one or more interfaces for communication (such as, for example, packet-based communication) between the computer device 1202 and one or more other computing devices or networks (e.g., a server). As an example, and not by way of limitation, the communication interface 1204 may include a network interface controller (NIC) or network adapter for communicating with an Ethernet or other wire-based network or a wireless NIC (WNIC) or wireless adapter for communicating with a wireless network, such as a Wi-Fi.

The at least one processor 1206 may include hardware for executing instructions, such as those making up a computer program. By way of non-limiting example, to execute instructions, the at least one processor 1206 may retrieve (or fetch) the instructions from an internal register, an internal cache, the memory 1208, or the storage device 1210 and decode and execute them to execute instructions. In some embodiments, the at least one processor 1206 includes one or more internal caches for data, instructions, or addresses. The at least one processor 1206 may include one or more instruction caches, one or more data caches, and one or more translation look aside buffers (TLBs). Instructions in the instruction caches may be copies of instructions in the memory 1208 or the storage device 1210.

The memory 1208 may be coupled to the at least one processor 1206. The memory 1208 may be used for storing data, metadata, and programs for execution by the processor(s). The memory 1208 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1208 may be internal or distributed memory.

The storage device 1210 may include storage for storing data or instructions. As an example, and not by way of limitation, storage device 1210 may include a non-transitory storage medium described above. The storage device 1210 may include a hard disk drive (HDD), Flash memory, an optical disc, a magneto-optical disc, magnetic tape, or a Universal Serial Bus (USB) drive or a combination of two or more of these. The storage device 1210 may include removable or non-removable (or fixed) media, where appropriate. The storage device 1210 may be internal or external to the storage device 1210. In one or more embodiments, the storage device 1210 is non-volatile, solid-state memory. In other embodiments, the storage device 1210 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 1210 may include machine-executable code stored thereon. The storage device 1210 may include, for example, a non-transitory computer-readable storage medium. The machine-executable code includes information describing functional elements that may be implemented by (e.g., performed by) the at least one processor 1206. The at least one processor 1206 is adapted to implement (e.g., perform) the functional elements described by the machine-executable code. In some embodiments the at least one processor 1206 may be configured to perform the functional elements described by the machine-executable code sequentially, concurrently (e.g., on one or more different hardware platforms), or in one or more parallel process streams.

When implemented by the at least one processor 1206, the machine-executable code is configured to adapt the at least one processor 1206 to perform operations of embodiments disclosed herein. For example, the machine-executable code may be configured to adapt the at least one processor 1206 to perform at least a portion or a totality of the method 1100 of FIG. 11. As another example, the machine-executable code may be configured to adapt the at least one processor 1206 to perform at least a portion or a totality of the operations discussed for the agricultural implement 104 of FIG. 1. As a specific, non-limiting example, the machine-executable code may be configured to adapt the at least one processor 1206 to cause the actuators 146 to lift and/or lower the wheels 108 coupled to the center toolbar 126.

The input/output device 1212 may correspond to the input/output device 1216 of FIG. 1 and may allow an operator of the agricultural implement 104 to provide input to, receive output from, the computer device 1202. The input/output device 1212 may include a mouse, a keypad or a keyboard, a joystick, a touch screen, a camera, an optical scanner, network interface, modem, other known I/O devices, or a combination of such I/O interfaces.

In some embodiments, the bus 1214 (e.g., a Controller Area Network (CAN) bus, an ISOBUS (ISO 11783-10 Compliant Implement Control)) may include hardware, software, or both that couples components of computer device 1202 to each other and to external components.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural implement, comprising:
a frame;
a toolbar coupled to the frame and carrying a plurality of row units, the toolbar comprising a center toolbar and wing toolbars;
a rockshaft assembly coupled to the center toolbar, the rockshaft assembly comprising a rockshaft;
wheel units laterally between neighboring row units, each wheel unit comprising a wheel, the wheel units fixedly coupled to the rockshaft such that rotation of the rockshaft causes uniform rotation of the wheel units; and
at least one actuator in operable communication with the rockshaft assembly and configured to cause rotation of the rockshaft assembly to cause the wheel units coupled to the center toolbar to raise or lower uniformly.

2. The agricultural implement of claim 1, wherein:
a first end of the at least one actuator is attached to a wheel unit of the wheel units; and
a second end of the at least one actuator is coupled to a mounting plate that is fixedly attached to the center toolbar.

3. The agricultural implement of claim 1 or claim 2, wherein the rockshaft assembly further comprises:
a bearing comprising a bearing housing disposed around the rockshaft; and
a connection member coupled to the bearing housing and the center toolbar.

4. The agricultural implement of any one of claims 1 through 3, wherein each wheel unit further comprises:
a pair of wheel plates coupled to an axle of the respective wheel of the wheel unit; and
a base plate between the pair of wheel plates and fixedly coupled to the pair of wheel plates, the base plate configured to couple to the at least one actuator.

5. The agricultural implement of claim 4, wherein an end of each wheel plate of the pair of wheel plates is welded to the rockshaft.

6. The agricultural implement of claim 4, wherein:
a first end of the at least one actuator is coupled to mounting plates fixedly coupled to the center toolbar; and
a second end of the at least one actuator is coupled to the base plate of the respective wheel unit.

7. The agricultural implement of any one of claims 1 through 6, wherein an end of each actuator is coupled to one of the wheel units.

8. The agricultural implement of any one of claims 1 through 7, further comprising:
mounting plates fixedly attached to the center toolbar, the at least one actuator coupled to the mounting plates; and
connection members fixedly attached to the center toolbar, the connection members coupled to the rockshaft.

9. The agricultural implement of any one of claims 1 through 8, wherein the at least one actuator is laterally aligned with the wheel of at least one wheel unit of the plurality of wheel units.

10. The agricultural implement of any one of claims 1 through 9, wherein the row units comprise a trench opening assembly and a trench closing assembly.

11. The agricultural implement of any one of claims 1 through 10, wherein the row units each comprise:
a body;
a seed meter;
a trench opening assembly rotationally coupled to the body;
a trench closing assembly rotationally coupled to the body; and
gauge wheels rotationally coupled to the body.

12. The agricultural implement of any one of claims 1 through 11, wherein the at least one actuator comprises a hydraulic cylinder.

13. A method of operating the agricultural implement of any preceding claim, the method comprising:
traversing an agricultural field with the agricultural implement; and
causing the rockshaft to rotate to lift or lower the wheels of the plurality of wheel units in unison.

14. The method of claim 13, wherein causing the rockshaft to rotate comprises rotating the rockshaft with at least one actuator operably coupled to at least one wheel unit of the plurality of wheel units.

15. The method of claim 13 or claim 14, further comprising causing wing toolbar wheel units coupled to the wing toolbars to lift or lower responsive to causing the rockshaft to lift or lower the wheels of the plurality of wheel units in unison.
